(19) Europäisches Patentamt

European Patent Office

Office européen des brevets

(11) Veröffentlichungsnummer: **0 364 816**

**A1**

(12) **EUROPÄISCHE PATENTANMELDUNG**

(21) Anmeldenummer: **89118435.0**

(22) Anmeldetag: **04.10.89**

(51) Int. Cl.5: **F04B 17/00 , H02K 7/14 , H02K 5/12**

(30) Priorität: **15.10.88 DE 3835233**

(43) Veröffentlichungstag der Anmeldung: **25.04.90 Patentblatt 90/17**

(84) Benannte Vertragsstaaten: **DE FR GB IT NL SE**

(71) Anmelder: **H S M - PRESSEN GmbH Bahnhofstrasse 115 D-7777 Salem 3 / Neufrach(DE)**

(72) Erfinder: **Schwelling, Hermann Bahnhofstrasse 115 D-7777 Salem 3 / Neufrach(DE)**

(74) Vertreter: **Seemann, Norbert W. Brehmstrasse 37 D-7320 Göppingen(DE)**

(54) **Elektro-hydraulische Motor-Pumpeneinheit.**

(57) Bei einer aus einem Elektromotor ( 1 ) mit axial fluchtend angeschlossener Hydraulikpumpe ( 2 ) sowie einer die einander zugekehrten freien Wellenenden ( 1a und 2a ) von Motor ( 1 ) und Pumpe ( 2 ) verbindenden Kupplung ( 3 ) bestehenden, baulich geschlossenen Antriebseinheit ist, die Hydraulikpumpe ( 2 ) unmittelbar an das abtriebsseitige Motorlagerschild ( 1b ) angeschlossen. Letzteres weist dabei stirnseitig einen mit einer Zentrierbohrung ( 4a ) versehenen Verstärkungsflansch ( 4 ) auf, in welche ein Zentrieransatz ( 2b ) des Pumpengehäuses ( 2 ) eingepaßt ist.

Fig. 1

EP 0 364 816 A1

## Elektro-hydraulische Motor-Pumpeneinheit

Die Erfindung bezieht sich auf eine aus einem Elektromotor mit axial fluchtend angesetzter Hydraulikpumpe bestehende, baulich geschlossene Antriebseinheit für die unterschiedlichsten Anwendungsfälle, wie beispielsweise für den Stößelantrieb von Abfallpressen o.ä.

Bei bislang bekannten Aggregaten dieser Art ist es üblich, an das abtriebsseitige Lagerschild der Motorwelle ein Zwischenstück anzuflanschen, das einerseits als Zentrierung für den Anbau der hydraulischen Pumpeinrichtung und zum anderen das Gehäuse für die Aufnahme und den Schutz der der Kupplungselemente für die beiden freien Wellenenden von Motor und Pumpe darstellt.

Der Nachteil dieser bekannten Bauart liegt nun aber vor allem darin, daß eine solche Einheit, bedingt durch das Zwischenstück, eine relativ große Baulänge aufweist und somit durch unnötigen Material- und mechanischen Bearbeitungsaufwand schwer und teuer ist.

Die Aufgabe der vorliegenden Erfindung besteht deshalb vor allem auch darin, eine baulich einfachere sowie gewichtsmäßig leichtere und kostengünstigere Ausführung der hier zur Rede stehenden Aggregate zu schaffen.

Gelöst wird diese Aufgabe in überraschend einfacher Weise durch die aus dem Hauptanspruch ersichtlichen, baulichen Maßnahmen. Die Unteransprüche beinhalten weitere vorteilhafte Ausgestaltungseinzelheiten der Erfindung.

Die Zeichnung zeigt in

Fig. 1 einen Längsschnitt durch die neue Verbindungsart und in

Fig. 2 eine Ansicht auf das Pumpengehäuse aus Richtung "P".

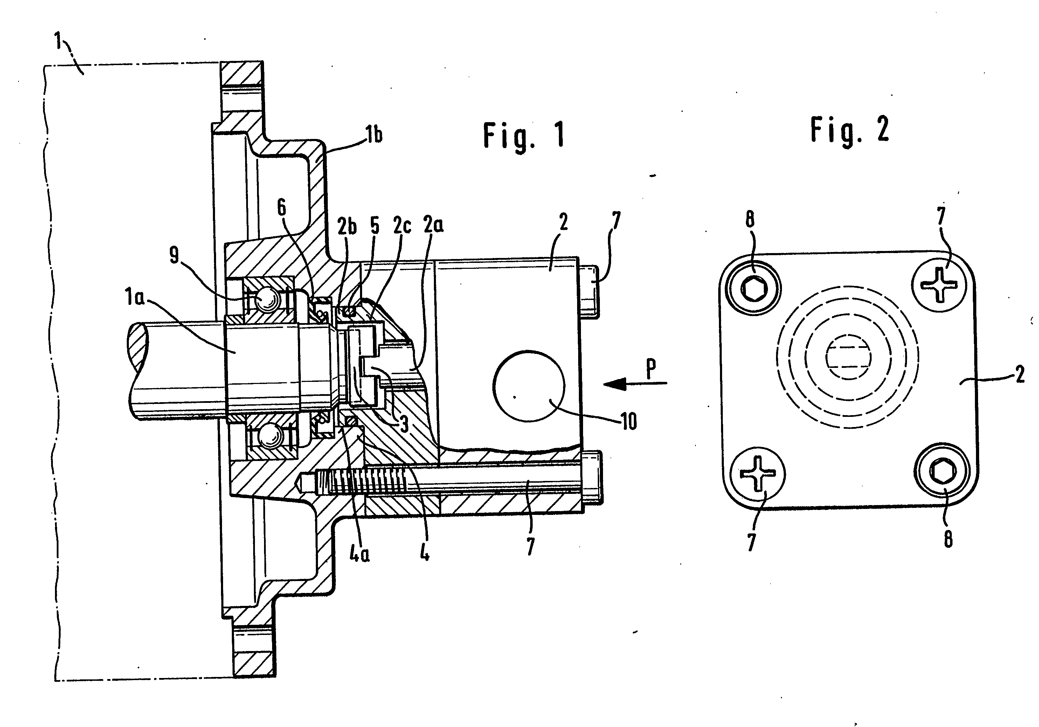

Die in Fig. 1 dargestellte Antriebseinheit besteht in ihrem Grundaufbau aus einem Elektromotor 1 mit axial fluchtend angeschlossener Hydraulikpumpe 2 sowie einer die einander zugekehrten freien Wellenenden 1a und 2a von Motor 1 und Pumpe 2 verbindenden Kupplung 3.

Neu für eine solche Antriebseinheit ist dabei, daß erstmals die Hydraulikpumpe 2 unmittelbar an das abtriebsseitige Motorlagerschild 1b anschließt, wobei das zeichnerisch dargestellte Ausführungsbeispiel vorsieht, daß das abtriebsseitige Motorlagerschild 1b stirnseitig einen mit einer Zentrierbohrung 4a versehenen Verstärkungsflansch 4 aufweist, in welche ein Zentrieransatz 2b des Pumpengehäuses 2 eingepaßt und letzteres lediglich mittels zwei einander diametral gegenüberliegender Durchgangsschrauben 7 am Flansch 4 des Motorlagerschildes 1b befestigt ist.

Diese erfindungsgemäße Ausführungsform ergibt neben der Lösung der eingangs gestellten Aufgaben zudem noch durch den wesentlich kürzeren Kupplungsbereich eine bessere Kraftübertragung, einen ruhigeren Lauf und somit geringeren Lagerverschleiß.

Baulich vervollständigt wird die neue Ausführung letztlich noch durch einen Freiraum bzw. eine Bohrung 2c im Zentrieransatz 2b des Pumpengehäuses 2 für die Unterbringung der vorzugsweise starren Kupplung 3 für die beiden Wellenenden 1a und 2a, sowie die Anordnung geeigneter Dichtungselemente 5 und 6 im Passungsbereich zwischen Zentrierbohrung 4a und Zentrieransatz 2b von Flansch 4 und Pumpengehäuse 2 sowie zwischen Motorlagerschild 1b und abtriebsseitigem Motorwellenstummel 1a. Mit Pos. 8 sind zwei das Pumpengehäuse zusammenhaltende Spannschrauben bezeichnet, Pos. 9 stellt das abtriebsseitige Motorwellenlager dar und mit Pos. 10 ist einer der Hydraulikanschlüsse der Pumpe 2 angedeutet.

### Bezugsziffernverzeichnis

1 Elektromotor
1a abtriebsseitiges Wellenende
1b Motorlagerschild
2 Pumpengehäuse
2a antriebsseitiges Wellenende
2b Zentrieransatz
2c Bohrung als Kupplungsfreiraum
3 Kupplung
4 Flansch
4a Zentrierbohrung
5 Dichtung
6 Dichtung
7 Durchgangsschraube
8 Gehäusespannschraube
9 Motorwellenlager
10 Hydraulikanschluß

### Ansprüche

1. Aus einem Elektromotor ( 1 ) mit axial fluchtend angeschlossener Hydraulikpumpe ( 2 ) sowie einer die einander zugekehrten freien Wellenenden ( 1a und 2a ) von Motor ( 1 ) und Pumpe ( 2 ) verbindenden Kupplung ( 3 ) bestehende, baulich geschlossene Antriebseinheit, bei der die Hydraulikpumpe ( 2 ) unmittelbar an das abtriebsseitige Ende des Elektromotors ( 1 ) anschließt),
**dadurch gekennzeichnet,**
daß das abtriebsseitige Motorlagerschild ( 1b ) stirnseitig einen mit einer Zentrierbohrung ( 4a )

versehenen Verstärkungsflansch ( 4 ) aufweist, in welchem das Pumpengehäuse ( 2 ) mit einem Zentrieransatz ( 2b ) eingepaßt ist.

2. Antriebseinheit nach Anspruch 1,

**gekennzeichnet durch**

einen Freiraum bzw. eine Bohrung ( 2c ) im Zentrieransatz ( 2b ) des Pumpengehäuses ( 2 ) für die Unterbringung der vorzugsweise starren Kupplung ( 3 ) für die beiden Wellenenden ( 1a und 2a ).

3. Antriebseinheit nach den Ansprüchen 1 und 2,

**gekennzeichnet durch**

Anordnung geeigneter Dichtungselemente (5 und 6 ) im Passungsbereich zwischen Zentrierbohrung ( 4a ) und Zentrieransatz ( 2b ) von Flansch ( 4 ) und Pumpengehäuse ( 2 ) sowie zwischen Motorlagerschild ( 1b ) und abtriebsseitigem Motorwellenstummel ( 1a ).

4. Antriebseinheit nach einem oder mehreren der vorhergehenden Ansprüche,

**dadurch gekennzeichnet,**

daß das Pumpengehäuse ( 2 ) mittels zwei einander diametral gegenüberliegender Durchgangsschrauben ( 7 ) am Flansch ( 4 ) des Motorlagerschilds ( 1b ) befestigt ist.

Fig. 1

Fig. 2

EP 0 364 816 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-B-2229175 (BOECHER)<br>* Spalte 4, Zeilen 1 - 51; Figur 1 *<br>--- | 1 | F04B17/00<br>H02K7/14<br>H02K5/12 |
| A | FR-A-1249552 (LES FILS DE EMILE SALMSON)<br>* Seite 1, rechte Spalte, Absatz 3 - Seite 2, linke Spalte, Absatz 2; Figuren 1-2 *<br>--- | 1, 2, 4 | |
| A | US-A-3604820 (SCHELLER)<br>* Spalte 3, Zeile 7 - Spalte 4, Zeile 4; Figuren 1-3 *<br>--- | 1, 3 | |
| A | US-A-4437821 (OGAWA)<br>* Spalte 3, Zeile 27 - Spalte 4, Zeile 14; Figuren 1-8 *<br>----- | 1, 4 | |

RECHERCHIERTE SACHGEBIETE (Int. Cl.5 )

F04B
F04C
H02K

Der vorliegende Recherchenbericht wurde für alle Patentansprüche erstellt

| Recherchenort | Abschlußdatum der Recherche | Prüfer |
|---|---|---|
| DEN HAAG | 21 DEZEMBER 1989 | VON ARX H.P. |